# EUROPÄISCHE PATENTSCHRIFT

(11) **EP 2 036 466 B1**
(45) Veröffentlichungstag und Bekanntmachung des Hinweises auf die Patenterteilung: **23.06.2010**
(21) Anmeldenummer: 07116211.9
(22) Anmeldetag: 12.09.2007
(51) Int. Cl.: A47J 31/36

(54) **Brüheinrichtung für eine Kaffeemaschine**
Brewing device for a coffee machine
Dispositif-infuseur pour une machine à café

(43) Veröffentlichungstag der Anmeldung: 18.03.2009
(73) Patentinhaber: Schaerer AG, 4528 Zuchwil (CH)
(72) Erfinder: Sinzig, Peter, 3302, Moosseedorf (CH)
(74) Vertreter: BOVARD AG

(56) Entgegenhaltungen:
- EP-A- 0 528 758

## Beschreibung

Die vorliegende Erfindung bezieht sich auf eine Brüheinrichtung für eine Kaffeemaschine, umfassend einen Brühzylinder mit einer zylindrischen Bohrung und zwei Kolben, durch welche der Brühzylinder zur Bildung einer Brühkammer abschliessbar ist, wobei der Brühzylinder und die Kolben relativ zueinander verschiebbar in einem Rahmen gehalten sind und über eine Antriebseinrichtung antreibbar sind, welche Antriebseinrichtung eine Spindel umfasst, deren beidseitigen Enden als Lagerzapfen ausgebildet sind und in im Rahmen angebrachten Lagerringen gleitend drehbar gelagert sind, eine Kaffeepulverzuführeinrichtung zum Befüllen der Brühkammer mit Kaffeepulver, und Mittel zum Wegführen des nach dem Brühvorgang aus der Brühkammer durch einen Kolben ausgestossenen Kaffeepulverkuchens in einen Auffangbehälter.

Derartige Brüheinrichtungen sind in vielfältiger Weise bekannt und werden sowohl in Haushaltskaffeemaschinen wie auch in Restaurationskaffeemaschinen eingesetzt. Zum Bezug eines Kaffees wird die erforderliche Menge von üblicherweise frisch gemahlenem Kaffeepulver, abhängig davon, welche Art von Kaffee bezogen wird, wie beispielsweise normaler Kaffee, Espressokaffee, Ristrettokaffee usw., in die Brühkammer eingefüllt. Die Brühkammer wird danach verschlossen, wonach heisses Wasser mit dem gewünschten Druck durch die Brühkammer geleitet wird, wobei Kaffee gebrüht wird. Der so frisch gebrühte Kaffee gelangt dann über einen Auslass in das bereitgestellte Gefäss. Die Brühkammer wird danach geöffnet, der darin befindliche Kaffeepulverrest wird aus der Brühkammer ausgeworfen und gelangt in einen Behälter.

Eine derartige Brüheinrichtung ist beispielsweise aus der EP-A 0 528 758 bekannt. Zum Oeffnen und Schliessen der Brühkammer ist eine Spindel angeordnet, die über einen Antriebsmotor drehbar antreibbar ist. Ueber diese Spindel, die mit einem Gewinde ausgestattet ist, wird der Brühzylinder entlang dieser Spindel verschoben, der Brühzylinder ist hierzu mit einem Mitnahmeteil ausgestattet, der mit einem Gewinde ausgestattet ist, welches in das Gewinde der Spindel eingreift, und welcher die Spindel um einen bestimmten Bereich umschlingt.

Die Spindel ist an ihren beidseitigen Enden mit einem Lagerzapfen versehen, welche in Lagerringen gleitend drehbar gehalten sind, die im Rahmen der Brüheinrichtung befestigt sind. Die Spindel mit den Lagerzapfen sowie der Rahmen und die weiteren Bestandteile der Brüheinrichtung bestehen aus einem abriebfesten Kunststoff, insbesondere POM (Polyoximethylen), und werden im Spritzgussverfahren hergestellt. Bei diesem Spritzgussverfahren, mit welchem die einzelnen Teile relativ kostengünstig hergestellt werden können, können nicht so genaue Toleranzen eingehalten werden, wie dies beispielsweise bei den Lagerabmessungen für die Lagerung der Spindel erforderlich wäre, um ein möglichst geringes Spiel zu erhalten. Durch das relativ grosse Spiel zwischen Lagerzapfen und Lagerringen tritt beim rotierenden Antreiben der Spindel ein Geräusch auf, das als störend empfunden wird. Durch die relativ grosse Toleranz beim Herstellvorgang können auch Unwuchten auftreten, die beim rotierenden Antreiben der Spindel ein Rumpelgeräusch ergeben, das ebenfalls störend ist.

Die Aufgabe der vorliegenden Erfindung besteht somit darin, die Lagerungen für diese Spindel so auszugestalten, dass die oben beschriebenen Geräusche vermieden werden können.

Erfindungsgemäss erfolgt die Lösung dieser Aufgabe dadurch, dass in mindestens einem der Lagerringe mindestens ein Abstützelement eingesetzt ist, welches mittels eines Federelementes im Wesentlichen radial gegen den Lagerzapfen drückbar ist.

Mit diesem Abstützelement wird erreicht, dass der Lagerzapfen auf der dem Abstützelement gegenüber liegenden Seite gegen den Lagerring gedrückt wird, wodurch man eine praktisch spielfreie Lagerung erhält, und wodurch die vorgängig beschriebenen Geräusche, die ohne Abstützelemente auftreten, in einfacher Weise vermieden werden können.

In vorteilhafter Weise ist das Abstützelement als Gleitkörper mit einer Gleitfläche ausgebildet, welcher in eine Ausnehmung im Lagerring eingesetzt ist und dessen Gleitfläche auf die Mantelfläche des Lagerzapfens drückbar ist. Dadurch erhält man eine sehr einfache und kostengünstige Lösung.

In vorteilhafter Weise ist das Federelement als Druckfeder ausgebildet, das in einfacher Weise mit dem einen Ende auf dem Gleitkörper abgestützt ist, während das andere Ende rahmenfest abgestützt ist.

Eine weitere vorteilhafte Ausgestaltung der Erfindung besteht darin, dass die Ausnehmung im Lagerring als durchgehende Bohrung ausgebildet ist, deren aussenseitige Oeffnung mit einer Abdeckung verschliessbar ist, welche am Rahmen befestigbar ist, sodass sich das andere Ende der Druckfeder auf dieser Abdeckung abstützt. Dadurch kann das Abstützelement in einfacher Weise in die montierte Position gebracht werden.

In vorteilhafter Weise weist der Gleitkörper die Form eines Bechers auf, dessen Boden die Gleitfläche bildet, die gegen den Lagerzapfen gerichtet ist und dessen Wandung in der Ausnehmung geführt ist. Dadurch wird ein optimaler Sitz des Abstützelementes im Lagerring erreicht, wodurch eine optimale Funktion gewährleistet ist.

In vorteilhafter Weise ist das Abstützelement aus Chromstahl gebildet, wodurch ein optimales Gleiten und ein geringer Verschleiss erreicht wird.

In vorteilhafter Weise ist die Gleitfläche des Gleitkörpers als ebene Fläche ausgebildet, was neben einer optimalen Funktion auch eine einfache Herstellung ermöglicht, eine Positionierung dieses Abstützelementes in der Ausnehmung ist nicht erforderlich.

Eine Ausführungsform der erfindungsgemässen Erfindung wird nachfolgend anhand der beiliegenden Zeichnung beispielhaft näher erläutert.

Es zeigt
Fig. 1 eine Schnittdarstellung einer Brüheinrichtung einer Kaffeemaschine beim Einfüllvorgang des Kaffeepulvers in die Brühkammer;
Fig. 2 eine Schnittdarstellung der Brüheinrichtung mit geschlossener Brühkammer während des Brühvorgangs für einen Kaffee;
Fig. 3 eine Schnittdarstellung der Brüheinrichtung mit geöffneter Brühkammer und durch den unteren Kolben ausgestossenem Kaffeepulverkuchen;
Fig. 4 eine Schnittdarstellung der Brüheinrichtung mit beginnender Abstreifung des Kaffeepulverkuchens durch die Abstreifeinrichtung;
Fig. 5 eine Schnittdarstellung der Brüheinrichtung entlang Linie V-V gemäss Fig. 1;
Fig. 6 eine Schnittdarstellung der Brüheinrichtung entlang Linie VI-VI gemäss Fig. 1; und
Fig. 6a eine vergrösserte Darstellung des Abstützelementes gemäss Fig. 6.

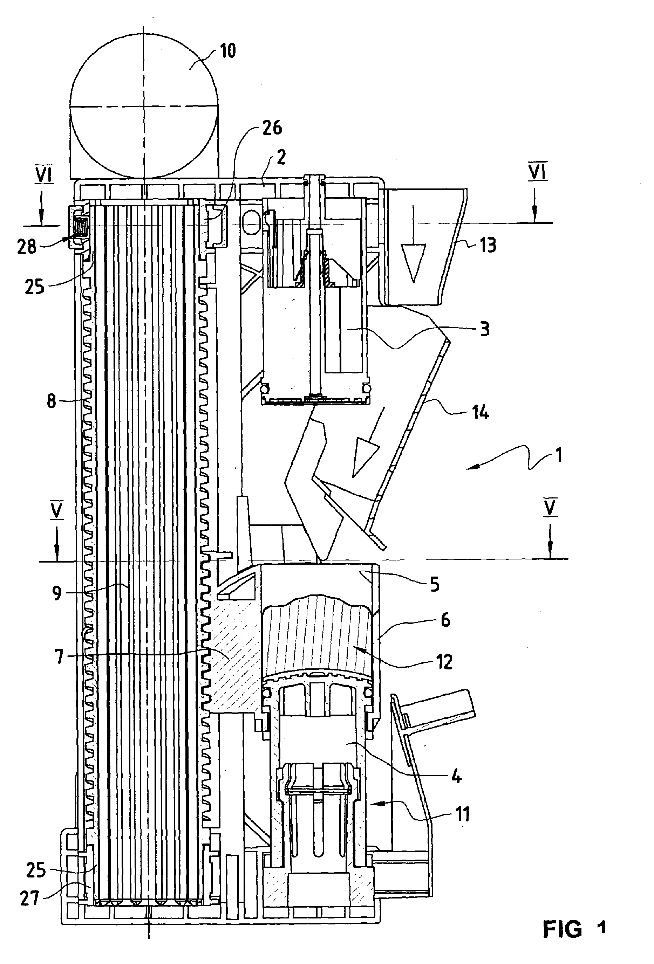

Wie aus den Figuren 1 bis 4 ersichtlich ist, umfasst die Brüheinrichtung 1 einen im Rahmen 2 ortsfest gehaltenen oberen Kolben 3. Dem oberen Kolben 3 axial gegenüber liegend ist ein unterer Kolben 4 angeordnet, der bezüglich des oberen Kolbens 3 axial verschiebbar ist. Dieser untere Kolben 4 ist in einer zylindrischen Bohrung 5 eines Brühzylinders 6 gehalten, welcher Brühzylinder 6 ebenfalls axial verschiebbar ist. Der Brühzylinder 6 ist mit einem Gewindeteil 7 ausgestattet, der später noch im Detail beschrieben wird, welcher mit einem Gewinde 8 einer drehbar im Rahmen 2 gehaltenen Spindel 9 in Eingriff ist. Diese Spindel 9 weist an den beidseitigen Enden jeweils einen Lagerzapfen 25 auf, die in im Rahmen 2 angebrachten oberen Lagerring 26 und unteren Lagerring 27 gleitend drehbar gehalten sind. Aus den Figuren 1 bis 4 ist ersichtlich, dass im oberen Lagerring 26 ein Abstützelement 28 eingesetzt ist, das später noch im Detail beschrieben wird. Die Spindel 9 ist in bekannter Weise über einen Elektromotor 10 antreibbar, der ebenfalls am Rahmen 2 angebracht ist.

In Fig. 1 ist die Brüheinrichtung 1 in der Füllposition dargestellt. Dies bedeutet, dass sich der untere Kolben 4 in der untersten Position befindet, in welcher er durch die am Rahmen 2 angebrachte Klinkeinrichtung 11 gehalten wird. Diese Position hat der untere Kolben 4 dadurch erreicht, dass der Brühzylinder 6 über die Spindel 9 durch entsprechende Rotation ebenfalls in die unterste Position gebracht worden ist, in welche der untere Kolben 4 mitgenommen worden ist, bis er in die Klinkeinrichtung 11 eingeklinkt ist, danach ist der Brühzylinder 6 durch entsprechendes Verdrehen der Spindel 9 wieder hochgefahren worden, wie dies in Fig. 1 ersichtlich ist, der untere Kolben verblieb hierbei in der untersten Position, der Brühzylinder 6 hat sich somit bezüglich des unteren Kolbens 4 angehoben, wodurch innerhalb des Brühzylinders 6 die nach unten durch den unteren Kolben 4 abgeschlossene Brühkammer 12 gebildet wird.

In diese Brühkammer 12 wird nun das frisch gemahlene Kaffeepulver zugeführt. Dieses Kaffeepulver wird in bekannter Weise in einer Kaffeemühle, die nicht dargestellt ist und die ebenfalls in der entsprechenden Kaffeemaschine untergebracht ist, gemahlen, das Pulver gelangt über einen ersten Trichter 13 auf einen schwenkbaren Trichter 14, durch welchen das gemahlene Kaffeepulver in die Brühkammer 12 geleitet wird. Hierbei wird zugeführte Kaffeepulvermenge in bekannter Weise dosiert, je nachdem, welche Art von Kaffee bezogen werden soll.

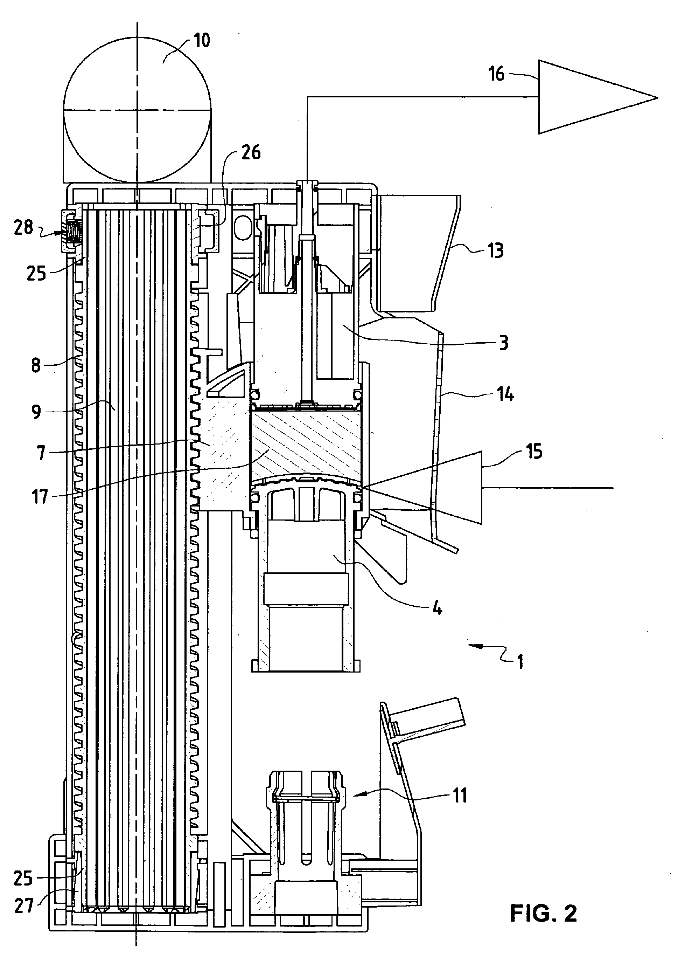

Nach dem Befüllen der Brühkammer 12 mit frisch gemahlenem Kaffeepulver wird die Spindel 9 über den Elektromotor 10 in Rotation versetzt, über den Gewindeteil 2 wird der Brühzylinder 6 hoch gefahren, wobei der untere Kolben 4 über entsprechende Mitnehmer mitgenommen wird. Der Brühzylinder 6 und der untere Kolben 4 werden solange hoch gefahren, bis die Brühkammer 12 durch den oberen Kolben 3 verschlossen wird und das sich in der Brühkammer 12 befindende Kaffeepulver gepresst wird. In dieser Position, die in Fig. 2 dargestellt ist, ist die Brühstellung erreicht. In bekannter Weise kann nun von unten her in die Brühkammer 12 das heisse Wasser zugeführt werden, wie dies durch Pfeil 15 dargestellt ist, das heisse Wasser durchströmt die Brühkammer 12 und das darin sich befindende gemahlene Kaffeepulver und wird über einen Abflusskanal, der in bekannter Weise im oberen Kolben 3 angebracht ist, als gebrühter Kaffee abgeleitet, wie dies durch Pfeil 16 dargestellt ist und gelangt in bekannter Weise über eine nicht dargestellte Leitung in einen Ausguss der Kaffeemaschine und von dort in das darunter bereitgestellte Gefäss. Zum Brühen des Kaffees wird das in der Brühkammer 12 sich befindende Kaffeepulver zwischen den beiden Kolben 3 und 4 derart komprimiert, dass dieses dem durchströmenden Brühwasser einen Widerstand entgegen setzt, sodass das Brühwasser mit einem Druck von etwa 8 bar durch die Brühkammer 12 gepresst werden muss. Das ausgebrühte Kaffeepulver verbleibt in der Brühkammer 12 und bildet einen Kaffeepulverkuchen, der sehr kompakt und feucht ist.

Wie aus Fig. 2 ersichtlich ist, wird der schwenkbare Trichter 14 beim Hochfahren des Brühzylinder 6 mit dem unteren Kolben 4 weggeschwenkt, hierbei ist dieser schwenkbare Trichter 14 mit einer nicht dargestellten Feder ausgestattet, welche den schwenkbaren Trichter 14 in die in Fig. 1 dargestellte Position zurückdrücken möchte.

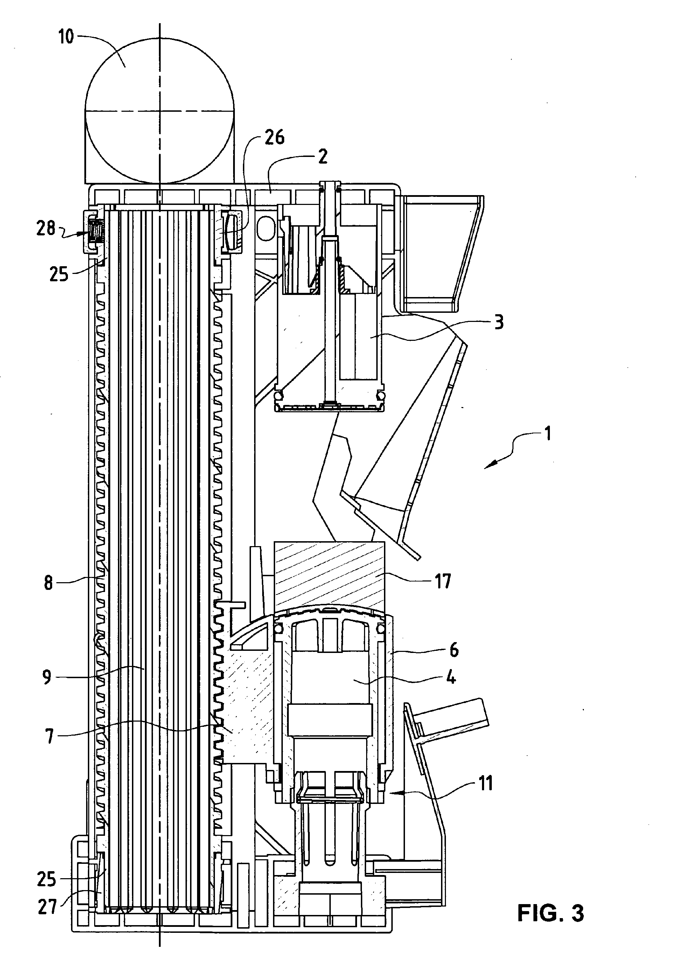

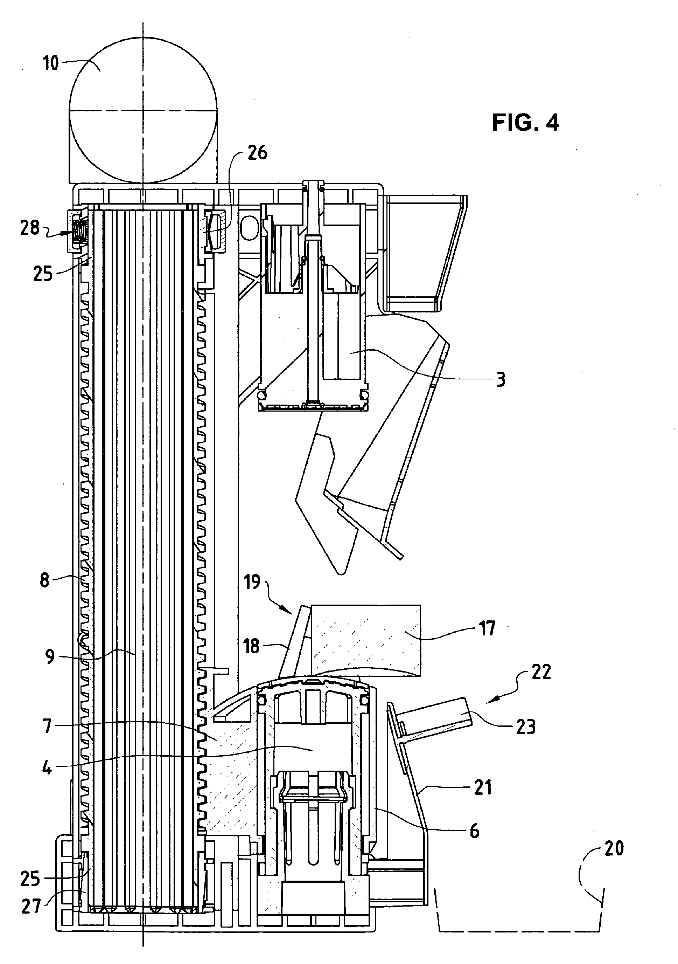

Nach der Durchführung des Brühvorgangs wird die Brühkammer 12 geöffnet, indem der Brühzylinder 6 und der untere Kolben 4 durch entsprechendes Verdrehen der Spindel 9 nach unten gefahren werden, wie dies in Fig. 3 dargestellt ist. Der untere Kolben 4 erreicht hierbei mit seinem unteren Ende die Klinkeinrichtung 11 und stützt sich darauf ab. Der Brühzylinder 6 wird weiter nach unten gefahren, der untere Kolben 4 bleibt stehen, wodurch der Kaffeepulverkuchen 17 aus dem Brühzylinder 6 ausgestossen wird, wie dies in Fig. 3 ersichtlich ist. Wenn der Brühzylinder 6 mit seinem oberen Rand den oberen Rand des unteren Kolbens 4 erreicht hat, wird der untere Kolben 4 mit dem weiter nach unten verfahrbaren Brühzylinder 6 über entsprechende Anschläge mitgenommen und in die Klinkeinrichtung 11 eingefahren, wie dies in Fig. 4 dargestellt ist. Wenn der Brühzylinder 6 und der untere Kolben 4 in den Bereich der unteren Position gelangen, wird ein Abstreifelement 18 einer Abstreifeinrichtung 19 in bekannter Weise mechanisch betätigt. Hierdurch bewegt sich das Abstreifelement 18 quer über die Oberfläche des unteren Kolbens 4, der Kaffeepulverkuchen 17 wird, wie aus Fig. 4 ersichtlich ist, vom unteren Kolben 4 und dem Brühzylinder 6 abgestreift.

Der auszuwerfende Kaffeepulverkuchen 17 gelangt hierbei über eine Rutsche 21, die am Rahmen 2 angebracht ist, in einen nur schematisch dargestellten, in der Kaffeemaschine untergebrachten Behälter 20. An der Rutsche 21 ist ein Teilelement 22 angebracht, das in diesem Ausführungsbeispiel als Klinge 23 ausgebildet ist, mittels welcher der über die Rutsche 21 in den Behälter 20 gelangende Kaffeepulverkuchen 17 in kleinere Stücke zerschnitten wird.

Nach dem Auswerfen des Kaffeepulverkuchens 17 kann der Brühzylinder 6 durch entsprechendes Rotieren der Spindel 9 wieder in die Füllstellung gebracht werden, wie diese in Fig. 1 dargestellt ist, die Brüheinrichtung ist bereit zum Brühen eines weiteren Kaffees.

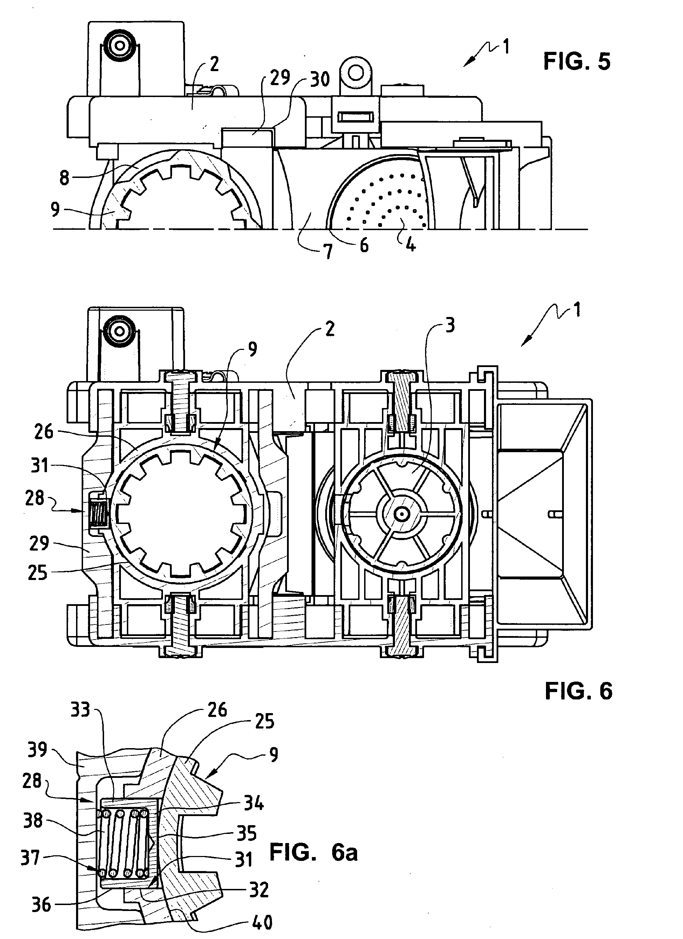

Aus Fig. 5 ist der Rahmen 2 der Brüheinrichtung 1 ersichtlich, in welchem die Spindeln 9 drehbar gehalten ist. In das Gewinde 8 der Spindel 9 greift der Gewindeteil 7 ein, an welchem der Brühzylinder 6 befestigt ist. Der Gewindeteil 7 umschliesst das Gewinde 8 der Spindel 9 um weniger als 180 Grad, dadurch kann auch dieser Teil in einfacher Weise mit dem Spritzgiessverfahren hergestellt werden. In den Brühzylinder 6 eingesetzt ist der untere Kolben 4.

Am Gewindeteil 7 sind Führungsrippen 29 angebracht, welche in Führungsnuten 30, die im Rahmen 2 angeordnet sind, längs der Spindel 9 geführt sind. Daduch ist ein optimaler Eingriff des Gewindeteils 7 im Gewinde 8 der Spindel 9 gewährleistet, zudem ist der Gewindeteil 7 mit dem daran angebrachten Brühzylinder 6 exakt geführt.

Fig. 6 zeigt den Rahmen 2 der Brüheinrichtung 1 mit dem darin gehaltenen oberen Kolben 3 und der im Rahmen gehaltetenen, drehbar gelagerten Spindel 9. Wie bereits erwähnt worden ist, weist diese Spindel 9 an beiden Enden einen Lagerzapfen 25 auf, wobei der obere Lagerzapfen 25 im oberen Lagerring 26, der im Rahmen 2 gehalten ist, drehbar gelagert ist. Um das Lagerspiel zwischen Lagerzapfen 25 und Lagerring 26 aufzuheben und zu vermeiden, dass eine zu starke Geräuschentwicklung statt findet, ist, wie in Fig. 6 ersichtlich ist, der obere Lagerring 26 mit einer Ausnehmung 31 versehen, in welche das Abstützelement 28 eingesetzt ist.

Wie aus der vergrösserten Ansicht der Fig. 6a entnommen werden kann, ist die Ausnehmung 31 als durchgehende Bohrung 32 im Lagerring 26 ausgebildet. In diese durchgehende Bohrung 32 ist das Abstützelement 28 eingesetzt, das die Form eines Bechers 33 aufweist. Der Boden 34 dieses Bechers 33 bildet die Gleitfläche 35, während die Wandung 36 des Bechers 33 in der durchgehenden Bohrung 32 geführt ist. In den Innenraum dieses Bechers 33 ist ein Federelement 37 eingesetzt, das hier als Druckfeder 38 ausgebildet ist. Das eine Ende dieser Druckfeder 38 stützt sich auf der Innenseite des Bodens 34 des Bechers 33 ab, während das andere Ende dieser Druckfeder 38 auf einer Abdeckung 39 abgestützt ist, welche am Rahmen 2 der Brüheinrichtung 1 gehalten ist, wie dies aus Fig. 6 ersichtlich ist.

Diese Druckfeder 38 drückt den Becher 33 gegen die Mantelfläche 40 des Lagerzapfens 25. Dadurch wird dieser Lagerzapfen 25 gegen den dem Abstützelement 28 gegenüberliegenden Bereich des Lagerrings 26 gedrückt, das Lagerspiel wird hierbei aufghoben, wodurch ein geräuscharmer Lauf der Spindel erreichbar ist. Die Gleitfläche 35 ist hierbei als ebene Fläche ausgebildet, wodurch neben einer optimalen Gleitfähigkeit erreicht wird, dass der Becher 33 bezüglich des Lagerrings bzw. der Mantelfläche 40 des Lagerzapfens 25 nicht ausgerichtet und nicht gegen Verdrehen gesichert sein muss.

Um optimale Gleiteigenschaften zwischen dem Abstützelement 28 und der Mantelfläche 40 der Lagerzapfen 25 der Spindel 9 zu erhalten, ist der Becher 33 aus Chromstahl gebildet.

Derartige Abstützelemente 28 können im oberen Lagerring 26 und/oder unteren Lagerring 27 angeordnet werden. Vorteilhafterweise werden in beiden Lagerringen 26 und 27 jeweils ein derartiges Abstützelement 28 angeordnet. Selbstverständlich ist es auch denkbar, dass pro Lagerring 26, und/oder 27 beispielsweise zwei Abstützelemente 28 angeordnet werden, die winkling zueinander versetzt sind, wodurch, falls ein grösseres Spiel zwischen Lagerzapfen 25 und Lagerringen 26 oder 27 auftritt, dieses ebenfalls aufgehoben werden könnte.

Mit dieser erfindungsgemässen Ausgestaltung einer Brüheinrichtung wird ein optimaler geräuscharmer Lauf der Spindel in der Lagerung erreicht.

## Patentansprüche

1. Brüheinrichtung für eine Kaffeemaschine, umfassend einen Brühzylinder (6) mit einer zylindrischen Bohrung und zwei Kolben (3, 4), durch welche der Brühzylinder (6) zur Bildung einer Brühkammer (12) abschliessbar ist, wobei der Brühzylinder (6) und die Kolben (3, 4) relativ zueinander verschiebbar in einem Rahmen (2) gehalten sind und über eine Antriebseinrichtung (9, 10) antreibbar sind, welche Antriebseinrichtung eine Spindel (9) umfasst, deren beidseitigen Enden als Lagerzapfen (25) ausgebildet sind und in im Rahmen (2) angebrachten Lagerringen (26, 27) gleitend drehbar gelagert sind, eine Kaffeepulverzuführeinrichtung zum Befüllen der Brühkammer (12) mit Kaffeepulver, und Mittel (19) zum Wegführen des nach dem Brühvorgang aus der Brühkammer (12) durch einen Kolben (4) ausgestossenen Kaffeepulverkuchens (17) in einen Auffangbehälter (20), **dadurch gekennzeichnet, dass** in mindestens einen der Lagerringe (26, 27) mindestens ein Abstützelement (28) eingesetzt ist, welches mittels eines Federelementes (37) im wesentlichen radial gegen den Lagerzapfen (25) drückbar ist.

2. Brüheinrichtung nach Anspruch 1, **dadurch gekennzeichnet, dass** das Abstützelement (28) als Gleitkörper mit einer Gleitfläche (35) ausgebildet ist, welcher in eine Ausnehmung (31) im Lagerring (26, 27) eingesetzt ist und dessen Gleitfläche (35) auf die Mantelfläche (40) des Lagerzapfens (25) drückbar ist.

3. Brüheinrichtung nach Anspruch 2, **dadurch gekennzeichnet, dass** das Federelement (37) als Druckfeder (38) ausgebildet ist, deren eines Ende auf dem Gleitkörper abgestützt ist, und deren anderes Ende rahmenfest abgestützt ist.

4. Brüheinrichtung nach Anspruch 2 oder 3, **dadurch gekennzeichnet, dass** die Ausnehmung (31) im Lagerring (26, 27) als durchgehende Bohrung (32) ausgebildet ist, deren aussenseitige Öffnung mit einer Abdeckung (39) verschliessbar ist, welche am Rahmen (2) befestigbar ist, so dass sich das andere Ende der Druckfeder (38) auf dieser Abdeckung (39) abstützt.

5. Brüheinrichtung nach einem der Ansprüche 2 bis 4, **dadurch gekennzeichnet, dass** der Gleitkörper die Form eines Bechers (33) aufweist, dessen Boden (34) die Gleitfläche (35) bildet, die gegen den Lagerzapfen (25) gerichtet ist und dessen Wandung (36) in der Ausnehmung (31) geführt ist.

6. Brüheinrichtung nach einem der Ansprüche 1 bis 5, **dadurch gekennzeichnet, dass** das Abstützelement (28) aus Chromstahl gebildet ist.

7. Brüheinrichtung nach einem der Ansprüche 2 bis 6, **dadurch gekennzeichnet, dass** die Gleitfläche (35) des Gleitkörpers als ebene Fläche ausgebildet ist.

## Claims

1. Brewing device for a coffee machine, comprising a brewing cylinder (6) with a cylindrical bore and two pistons (3, 4), by means of which pistons the brewing cylinder (6) is able to be closed off to form a brewing chamber (12), the brewing cylinder (6) and the pistons (3, 4) being held in a frame (2) in a way displaceable relative to one another and being drivable via a drive device (9, 10), which drive device comprises a spindle (9), both ends of which are designed as bearing pins (25) and are rotatably borne in a sliding way in bearing rings (26; 27) installed in the frame (2), a coffee powder supply device for filling the brewing chamber (12) with coffee powder, and means (19) for leading away the coffee powder cake (17), ejected from the brewing chamber (12) by a piston (4) after the brewing procedure, into a collection container (20), **characterised in that** inserted into at least one of the bearing rings (26, 27) is at least one supporting element (28), which is able to be pressed substantially radially against the bearing pin (25) by means of a spring element (37).

2. Brewing device according to claim 1, **characterised in that** the supporting element (28) is designed as sliding member with a sliding surface (35), which is inserted into a recess (31) in the bearing ring (26, 27) and whose sliding surface (35) is able to be pressed on the lateral surface (40) of the bearing pin (25).

3. Brewing device according to claim 2, **characterised in that** the spring element (37) is designed as compression spring (38), whose one end is supported on the sliding member, and whose other end is supported in a way fixed to the frame.

4. Brewing device according to claim 2 or 3, **characterised in that** the recess (31) in the bearing ring (26, 27) is designed as continuous bore (32), the external opening of which is able to be closed off with a cover (39), which is able to be fixed to the frame (2), so that the other end of the compression spring (38) is supported on this cover (39).

5. Brewing device according to one of the claims 2 to 4, **characterised in that** the sliding member has the shape of a cup (33), whose bottom (34) forms the sliding surface (35), which is directed against the bearing pin (25) and whose walling (36) is guided in the recess (31).

6. Brewing device according to one of the claims 1 to 5, **characterised in that** supporting element (28) is made of chromium steel.

7. Brewing device according to one of the claims 2 to 6, **characterised in that** the sliding surface (35) of the sliding member is designed as flat surface.

## Revendications

1. Dispositif infuseur pour une machine à café, comprenant un cylindre infuseur (6) avec un perçage central et deux pistons (3, 4) qui ferment le cylindre infuseur (6) pour former une chambre d'infusion (12), le cylindre infuseur (6) et les pistons (3, 4) étant maintenus coulissants entre eux dans un cadre (2) et étant entraînés par un dispositif d'entraînement (9, 10), dispositif d'entraînement qui comprend une broche (9) dont les deux extrémités sont formées comme des tenons (25) et sont logées en rotation coulissante dans des bagues de logement (26, 27) disposées dans le cadre (2), comprenant un dispositif d'amenée de poudre de café pour le remplissage de la chambre d'infusion (12) avec de la poudre de café et des moyens (19) pour l'évacuation de la galette de poudre de café (17) éjectée après l'infusion hors de la chambre d'infusion (12) par un piston (4) dans un récipient de collecte (20), **caractérisé en ce qu'**il est introduit dans au moins une des bagues de logement (26, 27) au moins un élément de soutien (28) qui peut être comprimé au moyen d'un élément ressort (37) sensiblement radialement contre le tenon (25).

2. Dispositif infuseur selon la revendication 1, **caractérisé en ce que** l'élément de soutien (28) est réalisé comme un corps coulissant avec une surface coulissante (35), corps qui est introduit dans un évidement (31) dans la bague de logement (26, 27) et dont la surface coulissante (35) peut être pressée contre la surface d'enveloppe (40) du tenon (25).

3. Dispositif infuseur selon la revendication 2, **caractérisé en ce que** l'élément de ressort (37) est réalisé comme un ressort de pression (38) dont une extrémité prend appui sur le corps coulissant et dont l'autre extrémité prend appui contre le cadre.

4. Dispositif infuseur selon la revendication 2 ou 3, **caractérisé en ce que** l'évidement (31) est réalisé dans la bague de logement (26, 27) comme un perçage traversé (32) dont l'ouverture externe peut être fermée par un couvercle (39) qui peut être fixé sur le cadre (2) de sorte que l'autre extrémité du ressort de pression (38) prend appui sur ce couvercle (39).

5. Dispositif infuseur selon l'une des revendications 2 à 4, **caractérisé en ce que** le corps coulissant présente la forme d'un godet (33) dont le fond (34) forme la surface coulissante (35) qui est orientée en direction du tenon (25) et dont la paroi (36) est guidée dans l'évidement (31).

6. Dispositif selon l'une des revendications 1 à 5, **caractérisé en ce que** l'élément de soutien (28) est réalisé en acier au chrome.

7. Dispositif infuseur selon l'une des revendications 2 à 6, **caractérisé en ce que** la surface de coulissement (35) du corps coulissant est réalisée comme une surface plane.
